(19) Europäisches Patentamt
European Patent Office
Office européen des brevets

(11) Veröffentlichungsnummer: 0 291 561 A1

# EUROPÄISCHE PATENTANMELDUNG

(21) Anmeldenummer: 87107787.1

(22) Anmeldetag: 29.05.87

(51) Int. Cl.⁴: A01N 59/24 , //(A01N59/24, 47:18,37:36,37:20,35:08)

(30) Priorität: 19.05.87 DD 302889

(43) Veröffentlichungstag der Anmeldung: 23.11.88 Patentblatt 88/47

(84) Benannte Vertragsstaaten: BE DE ES FR GB IT NL

(71) Anmelder: BAYER AG
Konzernverwaltung RP Patentabteilung
D-5090 Leverkusen 1 Bayerwerk(DE)

(72) Erfinder: Burth, Ulrich, Dr.
Im Kamp 72
DDR-1532 Kleinmachnow(DD)
Erfinder: Jahn, Marga, Dr.
Grasweg 21
DDR-1532 Kleinmachnow(DD)
Erfinder: Müller, Rainer Fritz, Dr.
Lupinenschlag 11
DDR-1532 Kleinmachnow(DD)
Erfinder: Motte, Günter, Dr.
Nansenstrasse 18
DDR-1500 Potsdam(DD)
Erfinder: Stachewicz, Hans-Erich, Dr.
Leninallee 1
DDR-1532 Kleinmachnow(DD)
Erfinder: Adam, Christiane, Dr.
Kalininring 53
DDR-2200 Greifswald(DD)
Erfinder: Kramer, Axel, Dr.
Georg-Engel-Strasse 20
DDR-2200 Greifswald(DD)
Erfinder: Weuffen, Wolfgang, Prof. Dr.
Haus 39 Guest
DDR-2200 Diedrichshagen(DD)
Erfinder: Tesche, Manfred, Prof. Dr.
Ernst-Thälmann Strasse 11
DDR-8223 Tharandt(DD)
Erfinder: Below, Harald
Loissinger Wende 1A
DDR-2200 Greifswald(DD)
Erfinder: Müller, Petra, Dr.
Winzerweg 13
DDR-1532 Kleinmachnow(DD)

## (54) Mittel zur Beizung von Kartoffeln, die für Ernährungszwecke bestimmt sind.

(57) Die Erfindung betrifft die Verwendung von bekannten Thiocyanaten allein oder im Kombination mit Fungiziden und gegebenenfalls mit Bakteriziden zur Beizung von Kartoffeln, die für Ernährungszwecke bestimmt sind.

EP 0 291 561 A1

Xerox Copy Centre

## Mittel zur Beizung von Kartoffeln, die für Ernährungszwecke bestimmt sind

Die Erfindung betrifft die Verwendung von bekannten Thiocyanaten allein oder in Kombination mit Fungiziden und gegebenenfalls mit Bakteriziden zur Beizung von Kartoffeln, die für Ernährungszwecke bestimmt sind. Die Beizung erfolgt zwecks Förderung der Wundabschlußreaktion. Keimhemmung und Senkung von Verlusten durch Lagerfäulen.

Die Einführung neuer Produktionsverfahren im Kartoffelbau ist durch eine Zunahme des Mechanisierungsgrades wie z.B. dem Einsatz von Vollerntemaschinen gekennzeichnet. Dadurch werden Verletzungen der Kartoffelknollen verursacht, die Eintrittspforten für verschiedenartige Schaderreger sind.

Aufgrund dieser Situation wird ein verstärktes Auftreten von Lagerfäulen beobachtet, so daß die Verbesserung der Kartoffelqualität auch weiterhin eine große wirtschaftliche Bedeutung hat.

So ist bekannt, daß zur Beizung bekannte Fungizide, wie z.B. Benzimidazolderivate oder Metalaxyl häufig in Kombination mit Bakteriziden, wie Chloramphenicol oder Bronopol vorgeschlagen werden (vgl. DD 78 423, 84 958, 107 204, 110 423, 130 427, 133 885 und 218 262).

Bei der Beizung von Kartoffeln gegenüber pilzlichen und bakteriellen Schaderregern wird lediglich ein Wirkungsgrad von 50 bis 70 % erreicht.

Weiterhin ist die Anwendung chemischer Keimhemmungsmittel zur zeitweisen oder dauernden Unterbindung des Keimwachstums an lagernden Kartoffeln bekannt. Die Wirkstoffe werden zum Teil auf das Kartoffelkraut appliziert, als Beizmittel vor der Lagerung sowie als Gas, Aerosol, Kondensat oder in der flüssigen Phase während der Lagerung angewendet. Dabei werden Verbindungen z.B. wie Isopropyl-N-(3-chlorphenyl)-carbamat, Maleinsäurehydrazid, α-Naphthyl-essigsäure-methylester, α-Menophthylether, Tetrachlornitrobenzol, Trimethylhexanol, α-Chlornaphthalin, Dimethylnaphthalin und verschiedene einwertige, geradkettige Alkohole der Kettenlängen von $C_9$ bis $C_{23}$ eingesetzt.

Die zur Zeit bekannten Verfahren zur Keimhemmung von Kartoffeln befriedigen nicht immer. Ein erheblicher Nachteil besteht in der starken Förderung von Lagerfäulen, die zu Verlusten führen. Bei der Anwendung von chemischen Verbindungen als Gase oder Aerosole sind häufig in der Lagerperiode mehrere Behandlungen notwendig. Dabei kommen häufig leichtentzündbare Substanzen, wie Alkohole kurzer bis mittlerer Kettenlänge zur Anwendung, die durch das entstehende Alkoholluftgemisch eine erhebliche Brand-Explosionsgefahr hervorrufen.

Weiterhin ist bekannt, daß Salze der Thiocyansäure zu verschiedenartigen Effekten an der Pflanze führen. Es wurde z.B. zur Wirkungsverstärkung von Herbiziden die Kombination mit Thiocyanaten vorgeschlagen (vgl. EP 0 038 948).

Herbizide Effekte dieser Substanzen werden u.a. zur Defoliation von Lupinen bzw. zur Krautabtötung von Kartoffeln ausgenutzt. Weiterhin ist bekannt, daß einige Thiocyanate das Pflanzenwachstum landwirtschaftlicher Nutzpflanzen unter bestimmten Bedingungen beschleunigen können. Kombinationen von Thiocyanten mit anderen Wachstumsregulatoren (z.B. Gibberelline und Thioharnstoff) sind zur Brechung der Keimruhe von Kartoffelknollen nach der Ernte bekannt. Ferner ist bekannt, daß nach Boden- oder Sproßbehandlung von Kulturpflanzen mit Thiocyanaten deren Resistenzniveau gegenüber Phytopathogenen erhöht werden kann.

Ziel der Erfindung ist es, die Nachteile bekannter Beizmittel für Kartoffeln zu beseitigen.

Der Erfindung liegt die Aufgabe zugrunde, geeignete Mittel und Verfahren für die Beizung von Kartoffeln, die für Ernährungszwecke verwendet werden, wie z.B. die Verwendung als Speisekartoffeln oder die Verwendung von deren Veredelungsprodukten, wie z.B. Pommes frites oder Chips, zu suchen, die bei Anwendung allein oder in Wirkstoffkombination eine Förderung der Wundabschlußreaktion, eine Keimhemmung sowie eine Senkung von Verlusten durch Lagerfäulen ermöglichen.

Es wurde gefunden, daß bekannte Thiocyanate, vorzugsweise dissoziierende Thiocyanate wie Natrium-, Kalium-und Ammoniumsalze, in üblicher Formulierung allein oder in Kombination mit verschiedenartigen Fungiziden und im Bedarfsfall mit Bakteriziden sich besonders gut zur Verwendung als Beizmittel von Kartoffeln, die für Ernährungszwecke verwendet werden, eignen.

Die erfindungsgemäße Verwendung von Thiocyanaten verursacht eine Keimhemmung, eine Förderung der Wundabschlußreaktion bei Verletzungen der Kartoffelknollen bei gleichzeitiger Senkung der Verluste durch Lagerfäulen. Der vorteilhafte Effekt dieser erfindungsgemäßen Beizung von Kartoffeln, die zu Ernährungszwecken verwendet werden, kann dann erreicht werden, wenn die Verwendung dissoziierender Thiocyanate allein oder dissoziierender Thiocyanate mit einem Fungizid und im Bedarfsfall zusätzlich mit einem Bakterizid im Verhältnis 100:1 bis 1:250, vorzugsweise im Verhältnis 50:1 bis 1:20, erfolgt.

Die erfindungsgemäße Beizung von Kartoffeln, die zu Ernährungszwecken verwendet werden, bewirkt eine Stabilisierung bei der Lagerung. Durch die Kombination von dissoziierenden Thiocyanaten mit Fungiziden z.B. aus der Acetylalaninestergruppe, genannt sei z.B. Metalaxyl der Formel (I)

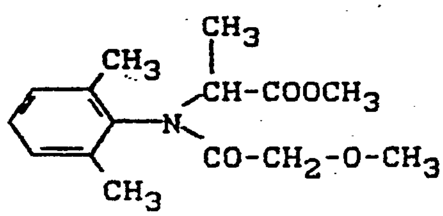

(I)

mit der chemischen Bezeichnung DL-N-(2,6-Dimethylphenyl)-N-(2'-methoxyacetyl)-alanin-methylester und aus der Klasse der Benzimidazole das Carbendazim der Formel (II)

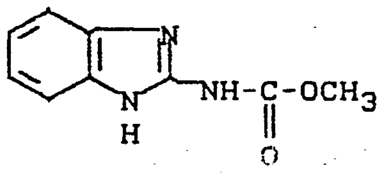

(II)

mit der chemischen Bezeichnung 2-(Methoxy-carbonylamino)-benzimidazol
sowie gegebenenfalls mit einem Bakterizid, wie z.B. Chloramphenicol der Formel (III)

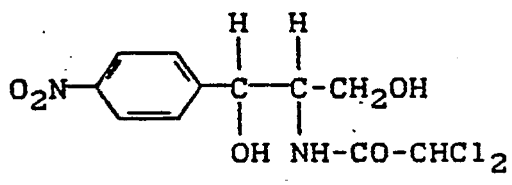

(III)

mit der chemischen Bezeichnung D(—)-threo-1-p-Nitrophenyl-2-dichloracetamido-propandiol-(1,3),
oder
Bronopol der Formel (IV)

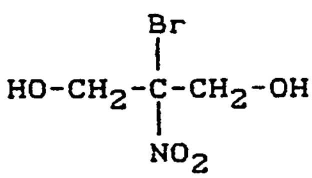

(IV)

mit der chemischen Bezeichnung 2-Brom-2-nitro-1,3-propandiol wird zusätzlich eine Verbesserung in der Wirksamkeit gegenüber Pilzen aus der Gruppe der Oomyceten, Asco- und Basidiomyceten sowie in der Wirksamkeit gegen Bakterienarten, wie Erwinia spp. erreicht.

Die Mischungsverhältnisse von Fungiziden zu Bakteriziden betragen bei der erfindungsgemäßen Verwendung der Wirkstoffkombination I:II:III von 5:25:1 bis 2:100:1 bzw. I:II:IV von 1:5:1 bis 1:50:3.

Zur Erzielung eines für die Praxis vorteilhaften Effektes können dissoziierende Thiocyanate als Kombinationspartner in Formulierungen mit Fungiziden und gegebenenfalls mit Bakteriziden verwendet oder in Tankmischungen eingesetzt werden.

Bei der Verwendung kommen zwischen 0,1 und 98 Masse-% Wirkstoff bzw. die Wirkstoffkombination, vorzugsweise zwischen 15 und 65 Masse-% und/oder flüssigen Träger-und Zusatzstoffen sowie Tensiden zum Einsatz.

Es können in üblicher Weise die für die Beizung zweckmäßig Formulierungen, wie beispielsweise benetzbare Pulver oder wäßrige Suspensionskonzentrate angewendet werden. Die Applikation erfolgt in bekannter Art, vorzugsweise unmittelbar nach der Ernte oder vor bzw. während der Einlagerung der Kartoffeln im Tauch- oder Schlämmbeizverfahren bzw. im Sprüh- oder Feinsprühverfahren. Zur Behandlung

von Kartoffeln kommen im allgemeinen zwischen 1 g bis 2,5 kg Wirkstoff/t, vorzugsweise 1 g bis 250 g Wirkstoff/t, zur Verwendung.

## Ausführungsbeispiele

Die ausgewählten Ausführungsbeispiele sollen die Erfindung erläutern ohne sie einzuschränken.

### Beispiel 1

Wirkung von Kaliumthiocyanat in Kombination mit Metalaxyl auf den Keimbefall an Kartoffeln der Sorte "Adretta" nach künstlicher Inokulation der Knollen mit Phytophthora infestans

Kartoffelknollen werden mit einer Kombination von Kaliumthiocyanat mit Metalaxyl (Kaliumthiocyanat:Metalaxyl 1:2,5) im Naßbeizverfahren behandelt. Nach künstlicher Infektion der Knollen wird der Keimbefall unter Laborbedingungen nach 15 Tagen beurteilt. Es wird ein deutlicher Effekt der Kombination von Kaliumthiocyanat mit Metalaxyl auf den Keimbefall mit Phytophthora infestans gefunden.

Tabelle 1

| Wirkstoff | Anwendungskonzentration | Keimlingsbefall mit Phytophthora infestans |
|---|---|---|
| Kontrolle | - | 100 % |
| Metalaxyl | 0,25 % | 18 % |
| KSCN + Metalaxyl | 0,10 % + 0,25 % | 0 % |

### Beispiel 2

Keimhemmung an Kartoffeln in einem Lagerversuch bei Bewertung der Keimzahl und Keimmasse

Kartoffelknollen der Sorte "Adretta" werden im Naßbeizverfahren nach der Ernte (20.09.1985) auf der Wirkstoffbasis von Kaliumthiocyanat mit einem Wirkstoffaufwand von 100 und 200 g/t behandelt. Zusätzlich erfolgt eine Kombination von 100 g/t Kaliumthiocyanat mit dem Fungizid Carbendazim der Formel (I) und dem Bakterizid Bronopol der Formel (IV). Zur Auswertung wird an 3 Terminen (10.04.; 06.05. und 13.05.1986) die Anzahl der Keime und die Keimmasse bestimmt. Es wird bei 100 g/t eine deutliche Reduzierung der Keimmasse beobachtet, ohne daß die Anzahl der Keime verringert wurde, während bei 200 g/t Anzahl und Masse der Keime drastisch reduziert war.

<u>Tabelle 2</u>

Ermittlung der Anzahl der Keime und der Keimmasse zur Zeit der Auslagerung nach Herbstbehandlung

| Wirkstoff | Aufwandmenge g/t | Anzahl Keime (%) 10.04. | 06.05. | 13.05. | Keimmasse (%) 10.04. | 06.05. | 13.05. |
|---|---|---|---|---|---|---|---|
| unbehandelte Kontrolle | - | 100 | 100 | 100 | 100 | 100 | 100 |
| Kaliumthiocyanat | 100 | 100 | 121 | 120 | 13 | 16 | 17 |
| Kaliumthiocyanat | 200 | 18 | 71 | 78 | 1.3 | 1.0 | 1.4 |
| Carbendazim<br>+ Bronopol | 120<br>12 | 98 | 97 | 96 | 93 | 99 | 92 |
| Kaliumthiocyanat<br>+ Carbendazim<br>+ Bronopol | 100<br>120<br>12 | 107 | 130 | 131 | 20 | 20 | 25 |

Beispiel 3

Förderung der Wundabschlußreaktion an der Kartoffelknolle bei Bewertung der Peridermschichtenbildung

Zur Versuchsdurchführung wird Kaliumthiocyanat auf verletzte Kartoffelknollen (Sorte "Adretta") in wäßriger Lösung als Naßbeizung aufgebracht und die Kartoffelknollen bis zur Versuchsauswertung bei 15°C und 20°C und 80 % rel. Luftfeuchte gelagert. Die Versuchsauswertung erfolgt nach 10 und 15 Tagen durch Ermittlung der Anzahl neugebildeter Peridermschichten. Durch die Behandlung wird die Anzahl neugebildeter Peridermischichten vor allem bei 10 und 33 g/t deutlich erhöht.

Tabelle 3

| Wirkstoff | Aufwandmenge pro t | Anzahl neugebildeter Peridermschichten nach 10 Tagen | | nach 15 Tagen | |
|---|---|---|---|---|---|
| | | 15° C | 20° C | 15° C | 20° C |
| Durchschnitt von | | 5 | 20 | 40 | 40 |
| | | Schnitten | | | |
| Kontrolle | -- | 3,8 | 4,9 | 5,3 | 8,2 |
| Kaliumthiocyanat | 100 g | 0,8 | 4,2 | 5,3 | 7,0 |
| Kaliumthiocyanat | 33 g | 2,8 | 5,2 | 6,0 | 7,4 |
| Kaliumthiocyanat | 10 g | 4,0 | 5,3 | 6,6 | 8,2 |

Beispiel 4

Förderung der Wundabschlußreaktion an Kartoffelknollen durch Verwendung von Wirkstoffkombinationen bei Bewertung der Peridermschichtenbildung

Zur Versuchsdurchführung werden die Wirkstoffe Kaliumthiocyanat, Carbendazim der Formel (II) und Chloramphenicol der Formel (III) bzw. Bronopol der Formel (IV) auf verletzte Kartoffelknollen (Sorte "Adretta") in wäßriger Suspension als Naßbeizung aufgebracht und die Kartoffelknollen bis zur Versuchsauswertung bei 15°C und 80 % rel. Luftfeuchte gelagert.

Die Versuchsauswertung erfolgt nach 10 und 15 Tagen durch Ermittlung der Anzahl neugebildeter Peridermschichten. Durch die Behandlung wird die Anzahl neugebildeter Peridermschichten deutlich erhöht.

Tabelle 4

| Wirkstoff | Aufwandmenge pro t | Anzahl neugebildeter Peridermschichten nach 10 Tagen | nach 15 Tagen |
|---|---|---|---|
| Kontrolle | - | 6,5 | 7,2 |
| Kaliumthiocyanat<br>+ Carbendazim<br>+ Chloramphenicol | 100 g<br>+ 120 g<br>+ 2,5 g | 8,6 | - |
| Kaliumthiocyanat<br>+ Carbendazim<br>Chloramphenicol | 10 g<br>+ 120 g<br>+ 2,5 g | 8,8 | - + |
| Kaliumthiocyanat<br>+ Carbendazim<br>+ Bronopol | 100 g<br>+ 120 g<br>+ 12 g | 7,6 | 8,9 |
| Kaliumthiocyanat<br>+ Carbendazim<br>+ Bronopol | 10 g<br>+ 120 g<br>+ 12 g | 7,4 | 8,8 |

Die erfindungsgemäß zu verwendenden Thiocyanate sind bekannt und käuflich zu erwerben, ebenso wie die bekannten Fungizide der Formeln (I) und (II) und die Bakterizide der Formeln (III) und (IV) (vgl. weiter vorn angegebenen Literatur).

## Ansprüche

1. Verwendung von Thiocyanaten in Formulierung allein oder in Kombination mit Fungiziden und gegebenenfalls mit Bakteriziden zur Beizung von Kartoffeln, die für Ernährungzwecke bestimmt sind.
2. Verwendung von Thiocyanaten gemäß Anspruch 1, wobei es sich um dissoziierende Thiocyanate handelt.
3. Verwendung von Thiocyanaten gemäß den Ansprüchen 1 und 2, wobei es sich um Natrium-, Kalium- und Ammoniumthiocyanat handelt.
4. Verwendung von Thiocyanaten gemäß Anspruch 1, wobei die Fungizide der Benzimidazolgruppe oder der Acetylalaninestergruppe angehören.
5. Verwendung von Thiocyanaten gemäß den Ansprüchen 1 und 4, wobei die Fungizide Carbendazim oder Metalaxyl sind.
6. Verwendung von Thiocyanaten gemäß Anspruch 1, wobei die Bakterizide Chloramphenicol oder Bronopol sind.
7. Verwendung von Thiocyanaten gemäß Anspruch 1, dadurch gekennzeichnet, daß zur Behandlung Kombinationen von dissoziierenden Thiocyanaten mit Fungiziden und im Bedarfsfall mit Bakteriziden im Verhältnis von 100:1 bis 1:250 eingesetzt werden.
8. Verwendung von Thiocyanaten gemäß Anspruch 7, dadurch gekennzeichnet, daß zur Behandlung Kombinationen von dissoziierenden Thiocyanaten mit Fungiziden und im Bedarfsfall mit Bakteriziden im Verhältnis von 50:1 bis 1:20 eingesetzt werden.
9. Verwendung von Thiocyanaten gemäß Anspruch 1, dadurch gekennzeichnet, daß zur Behandlung zwischen 0,1 und 98 Masse-% Wirkstoff bzw. Wirkstoffkombinationen neben üblichen festen und/oder flüsigen Träger- und Zusatzstoffen sowie Tensiden, eingesetzt werden.
10. Verwendung von Thiocyanaten gemäß Anspruch 9, dadurch gekennzeichnet, daß zur Behandlung zwischen 15 und 65 Mol-% Wirkstoff bzw. Wirkstoffkombinationen neben üblichen festen und/oder flüssigen Träger- und/oder flüssigen Träger- und Zusatzstoffen sowie Tensiden, eingesetzt werden.
11. Verwendung von Thiocyanaten gemäß Anspruch 1, dadurch gekennzeichnet, daß zur Behandlung zwischen 1 g bis 2,5 kg Wirkstoff/t eingesetzt werden.

12. Verwendung von Thiocyanaten gemäß Anspruch 1, dadurch gekennzeichnet, daß zur Behandlung zwischen 1 g bis 250 g Wirkstoff/t eingesetzt werden.

13. Mittel zur Beizung von Kartoffeln, die für Ernährungszwecke bestimmt sind, dadurch gekennzeichnet, daß sie dissoziierende Thiocyanate in üblicher Formulierung allein oder in Kombination mit Fungiziden und gegebenenfalls Bakeriziden enthalten.

Europäisches Patentamt

# EUROPÄISCHER RECHERCHENBERICHT

Nummer der Anmeldung

EP 87 10 7787

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CHEMICAL ABSTRACTS, Band 71, Nr. 21, 24. November 1969, Seite 228, Zusammenfassung Nr. 100635v, Columbus, Ohio, US; S.P. GUSEV et al.: "Use of ammonium thiocyanate to improve the quality of fodder and seed potatoes", & TR., MOSK. INST. NAR. KHOZ. 1968, No. 46, 179-85 * Zusammenfassung * | 1-3,9-13 | A 01 N 59/24 // (A 01 N 59/24 A 01 N 47:18 A 01 N 37:36 A 01 N 37:20 A 01 N 35:08 ) |
| X | CHEMICAL ABSTRACTS, Band 90, Nr. 9, 26. Februar 1979, Seite 129, Zusammenfassung Nr. 67623g, Columbus, Ohio, US; V.I. KURILOV et al.: "Desiccation and potato diseases", & ZASHCH. RAST. (Moscow) 1978, (10), 40 * Zusammenfassung * | 1-3,9,10,13 | |
| | | | **RECHERCHIERTE SACHGEBIETE (Int. Cl.4)** |
| X | CHEMICAL ABSTRACTS, Band 93, Nr. 13, 29. September 1980, Seite 623, Zusammenfassung Nr. 132072e, Columbus, Ohio, US; & CS-A-181 053 (J. REHOR) 15-01-1980 * Zusammenfassung * | 1,9-13 | A 01 N |

--- -/-

Der vorliegende Recherchenbericht wurde für alle Patentansprüche erstellt.

| Recherchenort | Abschlußdatum der Recherche | Prüfer |
|---|---|---|
| DEN HAAG | 21-09-1987 | FLETCHER A.S. |

KATEGORIE DER GENANNTEN DOKUMENTE

- X : von besonderer Bedeutung allein betrachtet
- Y : von besonderer Bedeutung in Verbindung mit einer anderen Veröffentlichung derselben Kategorie
- A : technologischer Hintergrund
- O : nichtschriftliche Offenbarung
- P : Zwischenliteratur
- T : der Erfindung zugrunde liegende Theorien oder Grundsätze
- E : älteres Patentdokument, das jedoch erst am oder nach dem Anmeldedatum veröffentlicht worden ist
- D : in der Anmeldung angeführtes Dokument
- L : aus andern Gründen angeführtes Dokument
- & : Mitglied der gleichen Patentfamilie, übereinstimmendes Dokument

Europäisches Patentamt

# EUROPÄISCHER RECHERCHENBERICHT

Nummer der Anmeldung

EP 87 10 7787

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DD-A- 218 262 (AKADEMIE DER LANDWIRTSCHAFTSWISSENSCHAFTEN DER DDR)<br>* Ansprüche; Seite 2, Zeile 9 - Seite 3, Zeile 36; Beispiele 2,3 *<br>--- | 1-13 | |
| D,A | DD-A- 110 423 (DR. U. BURTH et al.)<br>* Ansprüche *<br>--- | 1-13 | |
| D,A | DD-A- 133 885 (DR. H. LEHMANN et al.)<br>* Ansprüche; Seite 4, Zeile 1 - Seite 6, Zeile 4 *<br>--- | 1-13 | |
| D,A | EP-A-0 038 948 (J.T. BAKER CHEMICAL CO.)<br>* Ansprüche 1-4,14 *<br>--- | 1-3,9, 10,13 | RECHERCHIERTE SACHGEBIETE (Int. Cl.4) |
| A | CHEMICAL ABSTRACTS, Band 96, Nr. 19, 10. Mai 1982, Seite 263, Zusammenfassung Nr. 157261r, Columbus, Ohio, US; T. TAHAR: "Dormancy of potato varieties cultivated in Tunisia. II. Effect of chemical substances", & MEDED. FAC. LANDBOUWWET., RIJKSUNIV. GENT 1981, 46(4), 1137-42<br>* Zusammenfassung *<br>----- | 1-3,9, 10,13 | |

Der vorliegende Recherchenbericht wurde für alle Patentansprüche erstellt.

| Recherchenort | Abschlußdatum der Recherche | Prüfer |
|---|---|---|
| DEN HAAG | 21-09-1987 | FLETCHER A.S. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 82